# EUROPÄISCHE PATENTSCHRIFT

(11) **EP 2 807 912 B1**
(45) Veröffentlichungstag und Bekanntmachung des Hinweises auf die Patenterteilung: **04.07.2018**
(21) Anmeldenummer: 14401057.6
(22) Anmeldetag: 12.05.2014
(51) Int. Cl.: A01B 59/06

(54) **Anbaugerät**
Agricultural Implement
Dispositif d'attelage

(30) Priorität: 28.05.2013 DE 102013105440
(43) Veröffentlichungstag der Anmeldung: 03.12.2014
(73) Patentinhaber: Amazonen-Werke H. Dreyer GmbH & Co. KG, 49205 Hasbergen (DE)
(72) Erfinder: Isler, Claude, F-57000 Metz (FR); Klein, Laurent, 57910 HAMBACH (FR); Poehr, Alain, F-57385 Laudrefang (FR)

(56) Entgegenhaltungen:
- DE-A1- 3 337 654
- FR-A- 1 275 045
- GB-A- 2 146 212

## Beschreibung

Die Erfindung betrifft ein Anbaugerät gemäß des Oberbegriffes des Patentanspruches 1.

Ein derartiges Anbaugerät ist der GB-A-2146212 zu entnehmen.

Eine weiteres Anbaugerät ist in der DE 33 37 654 A1 beschrieben. Dieses Anbaugerät weist auf seiner Ankuppelseite an dessen Rahmen angeordnete Dreipunktkupplungselemente zum Anbau an einen einen Dreipunktkuppler mit Unterlenkerarmen und Oberlenker aufweisenden Schlepper auf. Die Dreipunktkupplungselemente des Anbaugerätes weisen ein Oberlenkeranschlusselement und zwei Unterlenkeranschlusselemente zum Ankuppeln an die Unterlenkerarme und den Oberlenker auf. Die Unterlenkeranschlusselemente mit den Unterlenkeranschlusspunkten sind mittels einer Schiebeführung auf an dem Rahmen des Anbaugerätes befestigten Tragarmen in unterschiedlichen Positionen angeordnet und können mittels Verstellvorrichtungen in und entgegen der Fahrtrichtung in unterschiedlichen Positionen einstellt und festlegt werden, so dass der jeweilige Unteranschlusspunkt in die jeweils gewünschte Position gebracht werden kann.

Die Tragarme, auf denen die Unterlenkeranschlusselemente mit den Unterlenkeranschlusspunkten verschiebbar angeordnet sind, müssen sowohl Schubkräfte oder Zugkräfte in horizontaler Richtung wie auch Hubkräfte in vertikaler Richtung aufnehmen und/oder übertragen. Aus diesem Grunde müssen die Tragarme relativ stabil und massiv ausgestaltet sein. Auch ist nachteilig, dass bei dem weiteren Aufschieben der Unterlenkeranschlusselemente auf die Tragarme, die Tragarme über die Unterlenkeranschlusselemente überstehen, welches beim Ankoppelungsvorgang der Unterlenker an die Unterlenkeranschlusspunkte der Unterlenkeranschlusselemente, insbesondere bei beengten Anbauverhältnissen hinderlich ist. So ragen die überstehenden Enden der Tragarme bei weit aufgeschobenen Unterlenkeranschlusselementen in nachteiliger und behindernder Weise weit in den Raum des Schleppers hinein.

Der Erfindung liegt die Aufgabe zugrunde, auch bei beengten Anbauverhältnissen eine einfach und stabil ausgestaltete Verstellmöglichkeit für verstellbare Unterlenkeranschlüsse zu schaffen.

Diese Aufgabe wird erfindungsgemäß durch die kennzeichnenden Merkmale des Anspruches 1 gelöst.

Infolge Maßnahmen ergibt sich eine leicht aufgebaute und trotzdem stabile Ausgestaltung verstellbarer Unterlenkeranschlusselemente. Lediglich die in horizontaler Richtung wirkenden Schub- und Zugkräfte sind von der im unteren Bereich angeordneten Verstelleinrichtung aufzunehmen, während die in vertikaler Richtung wirkenden Kräfte von den nach oben ragenden Schwenkhebeln und den zugeordneten Gelenken aufgenommen werden. In jeder möglichen Position der Unterlenkeranschlusselemente sind die Unterlenkeranschlusspunkte der jeweils die am weitesten vorstehende Bereiche. Somit gibt es keine hinderlichen überstehenden Teile im Bereich der Unterlenkeranschlusspunkte, welche in den Raum des Schleppers hindert hineinragen oder den Anbau des Anbaugerätes an den Dreipunktkuppler erschweren oder behindern.

So wird eine vorteilhafte Anordnung der Schwenkhebel für die Unterlenkeranschlusselemente erreicht.

Eine bevorzugte Platzierung der Gelenke für die Schwenkhebel ergibt sich dadurch, dass die Gelenke für die Schwenkhebel sich etwa auf der Höhe des Oberlenkeranschlusspunktes befinden.

Eine gute Einstellung und Krafteinleitung zwischen den Unterlenkeranschlusselementen und dem Rahmen des Anbaugerätes wird dadurch erreicht, dass die jeweilige Verstellvorrichtung sich zwischen dem jeweiligen Gelenk und dem jeweiligen Unterlenkeranschlusspunkt befindet, dass die jeweilige Verstellvorrichtung sich näher bei dem jeweiligen Unterlenkeranschlusspunkt als bei dem jeweiligen Gelenk befindet.

Weitere Einzelheiten der Erfindung sind der Beispielsbeschreibung zu entnehmen. Die Zeichnungen zeigen
- Fig.1: das Anbaugerät in Prinzipdarstellung und in perspektivischer Ansicht, wobei die Unterlenkeranschlusselemente mit ihren Unterlenkeranschlusspunkten in dichtstmöglicher Position zum Rahmen des Anbaugerätes eingestellt sind,
- Fig.2: das Anbaugerät in Seitenansicht mit der Einstellung der Unterlenkeranschlusselemente mit ihren Unterlenkeranschlusspunkten gemäß Fig. 1 und
- Fig.3: das Anbaugerät in Seitenansicht mit einer Einstellung der Unterlenkeranschlusselemente mit ihren Unterlenkeranschlusspunkten in entfernterer Stellung vom Rahmen.

Das Anbaugerät weist den Rahmen 1 auf. Das Anbaugerät kann als Rasenmäher, Bodenbearbeitungsgerät, Verteilmaschine, Mähgerät, Heuerntemaschine, etc. ausgebildet sein. Auf der Vorderseite, die in den meisten Fällen die Ankuppelseite 2 des Anbaugerätes an einen das Anbaugerät ziehenden Schlepper ist, sind an dem Rahmen 1 des Anbaugerätes die Unterlenkeranschlusselemente 3 und der Oberlenkeranschluss 4 der Dreipunktkupplungselemente 5 zum Anbau an einen Dreipunktkuppler Unterlenkerarmen und Oberlenker aufweisenden Schlepper angeordnet.

Der Oberlenkeranschluss 4 weist mehrere als Bohrungen 6 ausgebildete Oberlenkeranschlusspunkte auf, an denen entsprechend der jeweiligen Anbauverhältnisse mittels eines Bolzens der Oberlenker des Dreipunktkupplers anzuschließen ist.

Die Unterlenkeranschlusselemente 3 des Anbaugerätes befinden sich an Schwenkhebeln 7. An den unteren Enden der Schwenkhebel 7 befindet sich jeweils ein als Durchbruch 8 ausgebildeter Unterlenkeranschlusspunkt. Durch den Durchbruch 8 wird zum Anschluss des jeweiligen Unterlenkers des Dreipunktkupplers ein Bolzen 9 gesteckt. Hierdurch lässt sich der jeweilige Unterlenker des Dreipunktkupplers mit dem Unterlenkeranschlusspunkt 8 in festlegbarer Weise verbinden.

Die die Unterlenkeranschlusspunkte 8 aufweisen den Schwenkhebel 7 sind mittels eines Gelenkes 10 an dem Rahmen 1 des Anbaugerätes befestigt. Hierbei befindet sich dieses Gelenk 10 oberhalb der Unterlenkeranschlusspunkte 8. Weiterhin befinden sich diese Gelenke 10 für die Schwenkhebel 7 etwa auf der Höhe des Oberlenkeranschlusspunktes 4, wie den Zeichnungen zu entnehmen ist. Somit sind die beiden Unterlenkeranschlusselemente 8 jeweils an Schwenkhebeln 7, die an dem Rahmen 1 jeweils mittels eines beabstandet zu dem jeweiligen Unterlenkeranschlusselement 3 sich befindlichen Gelenkes 10 angelenkt sind, angeordnet. Hierbei befindet sich die jeweilige Verstellvorrichtung 11 zwischen dem jeweiligen Gelenk 10 und dem jeweiligen Unterlenkeranschlusspunkt 8. Die jeweilige Verstellvorrichtung 11 befindet sich näher bei dem jeweiligen Unterlenkeranschlusspunkt 8 als bei dem jeweiligen Gelenk 10.

Im unteren Bereich der Schwenkhebel 7 sind an dem Rahmen 1 Verstellhalterungen 12 mit den Verstellhalterungen 12 und den unteren Enden der Schwenkhebel 7 zugeordneten Verstelleinrichtungen 13 angeordnet. Den Verstellhalterungen 12 und den Schwenkhebeln 7 sind je nach Verschwenkung der Schwenkhebel 7 um die Gelenksachse der Gelenke 10 miteinander korrespondierende Bohrungen, durch welche jeweils ein Bolzen 14 der Verstelleinrichtung 11 steckbar ist, angeordnet.

Durch diese Anordnung sind die Schwenkhebel 7 mit den Unterlenkeranschlusspunktelementen 3 um die Gelenksachse der Gelenke 10, mit denen die Schwenkhebel 7 an dem Rahmen 1 angelenkt sind, in und entgegen der Fahrtrichtung 15 verschwenkbar und in unterschiedliche Positionen und Abständen zu dem Rahmen 1 zu bringen. Mittels 8 der zugeordneten Verstellvorrichtungen 13 ist der jeweilige Unteranschlusspunkt 8 in und entgegen der Fahrtrichtung 15 in unterschiedlichen Positionen einzustellen und festzulegen. Somit sind die Schwenkhebel 7 durch die Verstellvorrichtungen 13 in unterschiedlichen Positionen und Abständen für die Unterlenkeranschlusspunkte 8 der Unterlenkeranschlusselemente 3 zum Rahmen 1 festzulegen, in dem die Bolzen 14 der Verstellvorrichtung 13 in die jeweiligen Bohrung der Unterlenkeranschlusspunktelemente 3 und Schwenkhebel 7 nach dem entsprechenden Verschwenken der Schwenkhebel 7 in die gewünschte Position gesteckt werden.

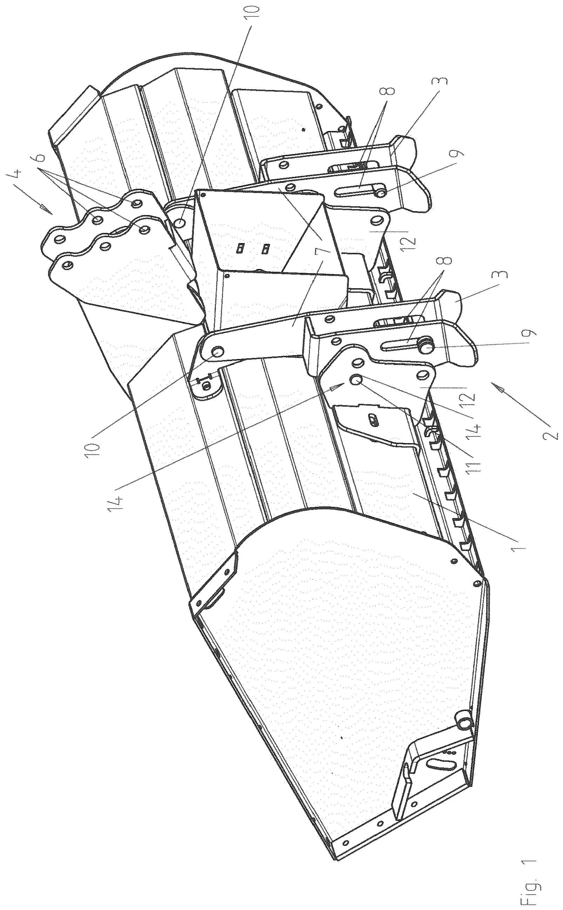

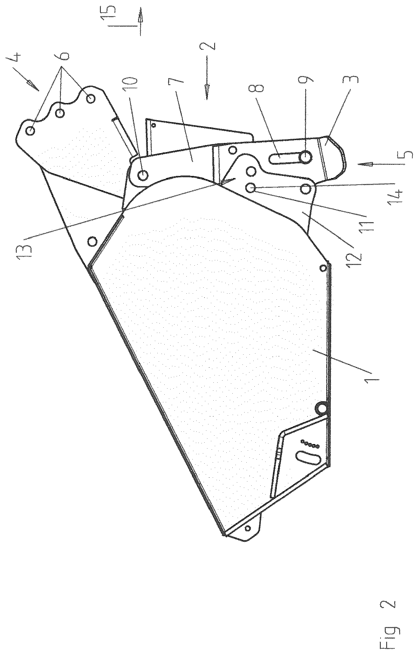

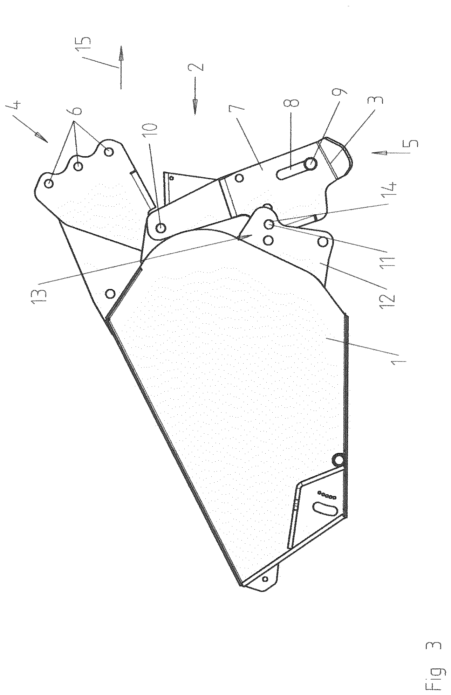

In den Fig. 1 und 2 sind die Schwenkhebel 7 möglichst dicht an den Rahmen 1 des Anbaugerätes herangeschwenkt und festgelegt sind, während die Schwenkhebel 7 in der Fig. 3 in der weitest möglichen Position vom Rahmen 1 weggeschwenkt und in dieser Position festgelegt sind.

Wie leicht zu erkennen ist, bildet der Unterlenkeranschlusspunkt 8 des jeweiligen Unterlenkeranschlusspunktes 3 quasi jeweils das vordere Ende des Anbaugerätes. Durch das Verstellen und Festlegen der Schwenkhebel 7 mit den Unterlenkeranschlusspunktelementen 3 und -anschlusspunkten 8 lassen sich die Unterlenkeranschlusspunktelemente 3 an die jeweiligen Anbauverhältnisse des Dreipunktkupplers des Schleppers, an dem das Anbaugerät eingebaut werden soll, in einfacher Weise anpassen.

Durch die entsprechende Ausgestaltung der feststellbaren Unterlenkeranschlusspunktelemente 3 werden die in horizontaler Richtung wirkenden wesentlichen Kräfte über die Verstellhalterungen 12 in den Rahmen 1 des Anbaugerätes eingeleitet, während die in vertikaler Richtung wirkenden Kräfte über die Gelenke 10, mit dem die Schwenkhebel 7 an dem Rahmen 1 angelenkt sind, in den Rahmen 1 eingeleitet.

## Patentansprüche

1. Anbaugerät mit auf seiner Ankuppelseite an dessen Rahmen (1) angeordneten Dreipunktkupplungselementen (5) zum Anbau an einen einen Dreipunktkuppler mit Unterlenkerarmen und Oberlenker aufweisenden Schlepper, wobei die Dreipunktkupplungselemente (5) des Anbaugerätes ein Oberlenkeranschlusselement (4) und zwei Unterlenkeranschlusselemente (3) zum Ankuppeln an die Unterlenkerarme und den Oberlenker aufweisen, wobei den beiden Unterlenkeranschlusselementen (3) Verstellvorrichtungen (11), mittels denen der jeweilige Unteranschlusspunkt (8) in und entgegen der Fahrtrichtung (15) in unterschiedlichen Positionen einstell- und festlegbar ist, zugeordnet sind, wobei die beiden Unterlenkeranschlusselemente (3) jeweils an Schwenkhebeln (7), die an dem Rahmen (1) jeweils mittels eines beabstandet zu dem jeweiligen Unterlenkeranschlusselement (3) sich befindlichen Gelenkes (10) angelenkt sind, angeordnet sind, wobei die Schwenkhebel (7) durch die Verstellvorrichtungen (11) in unterschiedlichen Positionen und Abständen für die Unterlenkeranschlusspunkte (8) der Unterlenkeranschlusselemente (3) zum Rahmen (1) festlegbar sind, **dadurch gekennzeichnet, dass** die Gelenke (10) für die Schwenkhebel (7) sich oberhalb der Unterlenkeranschlusspunkte (8) befinden, dass die Schwenkhebel (7) nach oben ragend verlaufend und in und entgegen der Fahrtrichtung (15) verschwenkbar an dem Rahmen (1) angeordnet und in unterschiedlichen Positionen und Abständen zu dem Rahmen (1) festzulegen sind, dass in dem unteren Bereich der Schwenkhebel (7) am Rahmen (1) die Verstellhalterungen (12) der Verstellvorrichtungen (11) und die den unteren Enden der Verschwenkhebel (7) zugeordneten Verstelleinrichtungen (13) angeordnet sind.

2. Anbaugerät nach Anspruch 1, **dadurch gekennzeichnet, dass** die Gelenke (10) für die Schwenkhebel (7) sich etwa auf der Höhe des Oberlenkeranschlusspunktes (4) befinden.

3. Anbaugerät nach zumindest einem der vorstehenden Ansprüche, **dadurch gekennzeichnet, dass** die jeweilige Verstellvorrichtung (11) sich zwischen dem jeweiligen Gelenk (11) und dem jeweiligen Unterlenkeranschlusspunkt (8) befindet, dass die jeweilige Verstellvorrichtung (11) sich näher bei dem jeweiligen Unterlenkeranschlusspunkt (8) als bei dem jeweiligen Gelenk (10) befindet.

## Claims

1. Attachment having three-point coupling elements (5), arranged on its coupling side on its frame (1), for attaching to a tractor having a three-point coupler having lower-link arms and an upper link, wherein the three-point coupling elements (5) of the attachment have an upper-link connection element (4) and two lower-link connection elements (3) for coupling to the lower-link arms and the upper link, wherein adjustment devices (11), by means of which the respective lower connection point (8) is settable and fixable in different positions in and counter to the direction of travel (15), are assigned to the two lower-link connection elements (3), wherein the two lower-link connection elements (3) are each arranged on pivot levers (7) which are hinged to the frame (1) in each case by means of a joint (10) located at a distance from the respective lower-link connection element (3), wherein the pivot levers (7) are fixable by the adjustment devices (11) in different positions and at different distances for the lower-link connection points (8) of the lower-link connection elements (3) from the frame (1), **characterized in that** the joints (10) for the pivot levers (7) are located above the lower-link connection points (8), **in that** the pivot levers (7) are arranged on the frame (1) in a manner projecting upwards and so as to be pivotable in and counter to the direction of travel (15) and are intended to be fixed in different positions and at different distances from the frame (1), **in that** the adjustment holders (12) of the adjustment devices (11) and the adjustment devices (13) assigned to the lower ends of the adjustment levers (7) are arranged in the lower region of the pivot levers (7) on the frame (1).

2. Attachment according to Claim 1, **characterized in that** the joints (10) for the pivot levers (7) are located approximately at the height of the upper-link connection point (4).

3. Attachment according to at least one of the preceding claims, **characterized in that** the respective adjustment device (11) is located between the respective joint (11) and the respective lower-link connection point (8), **in that** the respective adjustment device (11) is located closer to the respective lower-link connection point (8) than to the respective joint (10) .

## Revendications

1. Outil porté avec des éléments d'attelage à trois points (5) disposés sur son châssis (1) sur son côté d'attelage en vue du montage sur un tracteur présentant un attelage à trois points avec des bras de liaison inférieurs et un bras de liaison supérieur, dans lequel les éléments d'attelage à trois points (5) de l'outil porté présentent un élément de raccordement de bras de liaison supérieur (4) et deux éléments de raccordement de bras de liaison inférieur (3) pour le couplage aux bras de liaison inférieurs et au bras de liaison supérieur, dans lequel des dispositifs de réglage (11), au moyen desquels le point de raccordement inférieur respectif (8) peut être réglé et fixé dans différentes positions dans et contre la direction de déplacement (15), sont associés aux deux éléments de raccordement de bras de liaison inférieurs (3), dans lequel les deux éléments de raccordement de bras de liaison inférieurs (3) sont disposés respectivement sur des leviers pivotants (7) qui sont articulés au châssis (1) respectivement au moyen d'une articulation (10) se trouvant à distance de l'élément de raccordement de bras de liaison inférieur respectif (3), dans lequel les leviers pivotants (7) peuvent être fixés au châssis (1) par les dispositifs de réglage (11) dans des positions et à des distances différentes pour les points de raccordement de bras de liaison inférieurs (8) des éléments de raccordement de bras de liaison inférieurs (3), **caractérisé en ce que** les articulations (10) pour les leviers pivotants (7) se trouvent au-dessus des points de raccordement de bras de liaison inférieurs (8), **en ce que** les leviers pivotants (7) sont disposés en position s'étendant vers le haut et de façon pivotante sur le châssis (1) dans et contre la direction de déplacement (15) et doivent être fixés dans des positions et à des distances différentes par rapport au châssis (1), **en ce que** les supports de réglage (12) des dispositifs de réglage (11) et les dispositifs de réglage (13) associés aux extrémités inférieures des leviers pivotants (7) sont disposés dans la région inférieure des leviers pivotants (7) sur le châssis (1).

2. Outil porté selon la revendication 1, **caractérisé en ce que** les articulations (10) pour les leviers pivotants (7) se trouvent environ à la hauteur du point de raccordement de bras de liaison supérieur (4).

3. Outil porté selon au moins une des revendications précédentes, **caractérisé en ce que** le dispositif de réglage respectif (11) se trouve entre l'articulation respective (11) et le point de raccordement de bras de liaison inférieur respectif (8), et **en ce que** le dispositif de réglage respectif (11) se trouve plus près du point de raccordement de bras de liaison inférieur respectif (8) que de l'articulation respective (10).
